# EUROPÄISCHE PATENTSCHRIFT

(11) **EP 1 786 564 B1**
(45) Veröffentlichungstag und Bekanntmachung des Hinweises auf die Patenterteilung: **17.11.2010**
(21) Anmeldenummer: 05772115.1
(22) Anmeldetag: 18.08.2005
(51) Int. Cl.: B03B 9/06, B02C 17/00

(54) **ANLAGE ZUR SELEKTIVEN BEHANDLUNG VON UNSORTIERTEN ODER VORSORTIERTEN ABFALLSTOFFEN**
INSTALLATION FOR THE SELECTIVE TREATMENT OF UNSORTED OR PRE-SORTED WASTE MATERIAL
INSTALLATION POUR LE TRAITEMENT SELECTIF DE DECHETS NON TRIES OU PRETRIES

(30) Priorität: 26.08.2004 AT 14392004
(43) Veröffentlichungstag der Anmeldung: 23.05.2007
(73) Patentinhaber: Metran Rohstoff-Aufbereitungs GmbH, A-3300 Amstetten (AT)
(72) Erfinder: PANOWITZ, Günther, A-3300 Amstetten (AT)
(74) Vertreter: Babeluk, Michael
(86) Internationale Anmeldenummer: PCT/AT2005/000329
(87) Internationale Veröffentlichungsnummer: WO 2006/021013

(56) Entgegenhaltungen:
- CH-A- 587 680
- DE-A1- 2 517 487
- DE-A1- 4 100 346
- DE-A1- 4 319 989
- US-A- 5 632 380
- KOCH P: "Konzepte zur Zerlegung und Aufbereitung von Elektronikschrott CONCEPTS FOR DISMANTLING AND PROCESSING OF ELECTRONIC SCRAP" AUFBEREITUNGS TECHNIK, VERLAG FUER AUFBEREITUNG, WIESBADEN, DE, Bd. 34, Nr. 8, August 1993 (1993-08), Seiten 399-402,404, XP000392222 ISSN: 0004-783X

## Beschreibung

Anlage zur selektiven Behandlung von unsortierten oder vorsortierten Abfallstoffen, Teilen, Bauteilen und/oder Stoffen, insbesondere aus elektrischen und/oder elektronischen Geräten, vorzugsweise Altgeräten, mit einem Abfallsortiersystem mit zumindest einer Abfallbehandlungsstraße, mit zumindest einem Sortiermittel und zumindest einer selektiven mechanischen Vorzerkleinerungseinrichtung, welche in der Abfallbehandlungsstraße anschließend an zumindest ein erstes Sortiermittel zum Aussortieren von definierten ökoaktiven Abfallbestandteilen und/oder von anderen definierten Komponenten und Teilen abgeordnet ist, wobei die mechanische Vorzerkleinerungseinrichtung eine Einrichtung zur gravitativen Aufprallzerkleinerung ist und durch eine Rohrmühle gebildet ist und wobei - bezogen auf den Abfallstrom in der Abfallbehandlungsstraße - stromabwärts der Vorzerkleinerungseinrichtung zumindest eine Trenneinrichtung zum Auftrennen des vorzerkleinerten Materials in Fraktionen angeordnet ist.

Weiters betrifft die Erfindung ein Verfahren zur selektiven Behandlung von unsortierten oder vorsortierten Abfallstoffen, Teilen, Bauteilen und/oder Stoffen, insbesondere aus elektrischen oder elektronischen Geräten, vorzugsweise Altgeräten, wobei definierte ökoaktive Abfallbestandteile, welche beim nachfolgenden selektiven mechanischen Vorzerkleinern Schadstoffe freisetzen könnten, und/oder definierte Komponenten und Teile, aussortiert werden, und wobei Geräte und Gerätebestandteile, welche verbliebene ökopassive Abfallbestandteile enthalten, selektiv mechanisch durch eine prallkörperfreien Rohrmühle vorzerkleinert und/oder zerkleinert werden, wobei die Vorzerkleinerung mittels gravitativer Aufprallzerkleinerung zumindest größtenteils durch gegenseitige Kollision der Altgeräte und deren Bestandteile erfolgt, wobei anschließend an die Aufprallzerkleinerung die vorzerkleinerten Materialien durch zumindest eine Trenneinrichtung in Fraktionen aufgetrennt werden und schadstoffbefrachtete und/oder sicherheits- und/oder umweltrelevante Materialien, Bauteile und Stoffe und/oder definierte, getrennt zu erfassende Fraktionsgruppen aussortiert werden.

Verfahren zur mechanischen Aufbereitung derart komplex zusammengesetzter Abfälle, die eine Vielzahl von Werkstoffen unterschiedlicher Zusammensetzung und unterschiedlicher Verteilung enthalten mit dem Ziel, verwertbare Inhaltsstoffe einer Wiederverwendung zuzuführen, sind bekannt.

So beschreibt die DE 41 00 346 A1 ein Verfahren zur mechanischen Aufbereitung von unsortiertem Schrott aus elektrischen und elektronischen Bauteilen enthaltenden Geräten, wobei zuerst eine manuelle Zerlegung der Geräte in ihre Hauptbestandteile und eine Sortierung der Hauptbestandteile nach geeigneten Fraktionen, dann eine Vorzerkleinerung des aus den elektrischen und elektronischen Bauteilen bestehenden Elektronikschrottes auf eine Teilegröße <2 cm bis 4 cm und eine Gewinnung der groben Metallanteile in zwei aufeinanderfolgenden Sortierstufen, einer Magnetscheidung zur Abtrennung der groben Einsanteile und einer Wirbelstromscheidung zur Abtrennung der groben Nichteisenmetallanteile erfolgt. Das vorzerteilte Restgut wird danach auf eine Korngröße unter 1 cm vorzerteilt, wobei weiter durch Magnetabscheidung die Eisenmetall-Anteile und Nichteisenmetall-Anteile durch Sichtung und/oder elektrostatische Abscheidung gewonnen werden. Schließlich wird das nachzerkleinerte Restgut auf eine Korngröße <100 µm feinzerkleinert und durch Nasstrennung in einer Kunststoff- und eine Metallfraktion getrennt. Bei der Vor- und Nachzerkleinerung wird anfallender Staub abgesaugt und in der Nasstrennstufe aufbereitet. Das vorzerkleinerte Grobgut wird an einem Transportband handverlesen.

Die DE 43 19 989 A1 beschreibt ein Verfahren und eine Vorrichtung zur Aufbereitung von Sekundärrohstoffen, insbesondere zur Aufbereitung von Elektronikschrott, um zu Erreichen, dass die einzelnen Wertstofffraktionen möglichst sortenrein anfallen, wird nach der Vordemontage und/oder nach einer Zerkleinerung und Klassierung einer Sortierung mittels Sensoren und Abwurfeinrichtung durchgeführt.

Die EP 0 403 695 A beschreibt ein Verfahren und eine Anlage zur Verwertung von Gerätschrott, bei dem stufenweise abwechselnd zerkleinert, magnetisch und mechanisch physikalisch, z.B. mittels elektrostatischer Separatoren, separiert wird, wodurch eine magnetische und eine nichtmagnetische Metallmischfraktion erhalten wird, die zur nasschemischen und/oder elektrolytischen weiteren Trennung geeignet ist, und ferner eine deponierfähige nichtmetallische Mischfraktion abgetrennt wird.

Neben diesen oben genannten Verfahren, die ausschließlich eine trockene Aufbereitung beschreiben, ist aus der DE 41 00 346 A ein Verfahren zur mechanischen Aufbereitung von unsortiertem Geräteschrott bekannt, bei dem in drei Stufen in vorgenannter Weise trocken durch Zerkleinerung, Klassierung, Magnetscheidung, Elektrostatikscheidung und Wirbelstromscheidung verschiedene Eisenfraktionen und Nichteisenmetallfraktionen gewonnen, sowie ein Mischgut erhalten wird, das auf eine Größe <100 µm vermahlen und nass mit Hilfe eines Stoßherdes in eine weitere Nichteisenmetallfraktion und in eine Kunststofffraktion aufgetrennt wird.

Die EP 0 156 144 A zeigt ein Verfahren zur Trennung metallischer Anteile von nicht metallischen Anteilen aus Kabelschrott und Elektronikschrott. Um sämtliche Fraktionen des Abfalls der Rückgewinnung zugängig zu machen, wird eine Vorfraktionierung in Form einer Sedimentation oder Zentrifugalsedimentation vorgesehen. Der schwere Austrag dieser Vorfraktionierung wird mittels eines Schichtströmungsverfahrens weiter fraktioniert und zwar in eine schweremetallische Fraktion und eine nichtmetallische Fraktion.

Aus der DE 39 23 910 A1 ist ein Verfahren und eine Anlage zur Verwertung von Geräteschrott bekannt, wobei der Geräteschrott stufenweise abwechselnd mechanisch zerkleinert, magnetisch separiert und mechanisch-physikalisch separiert wird. Bei der Zerkleinerung anfallender Staub wird pneumatisch gesammelt und ausgefiltert.

Die DE 33 25 504 A1 beschreibt ein Verfahren zur Aufbereitung mit Teilrecycling von Hausmüll, Sperrmüll, im Wesentlichen aus Verpackungsabfall bestehenden Gewerbemüll und kommunalem Klärschlamm, wobei eine Grobklassierung von Sperrmüll und Gewerbemüll auf Stangenrost durchgeführt wird, wobei der Siebdurchgang zum Hausmüll gelangt. Das Sperrgut wird sehr grob zerkleinert. Der Hausmüll mit Siebdurchgang wird in drei Fraktionen klassiert. Allen Fraktionen wird mittels Magnetscheider Eisen entzogen, welches in einer Kugelmühle nachbehandelt und nach der Kugelmühle mittels Überbandmagnet von den Verschmutzungsresten getrennt wird. Das Mahlgut wird dabei durch eine zentrale Öffnung in einer Stirnwand der Kugelmühle zugeführt, das Feingut verlässt die Kugelmühle durch auswechselbare Lochplatten in den Seitenwänden. Das Zerkleinern des Mahlgutes erfolgt durch Kugeln gebildete abfallfremde Prallkörper.

Weiters ist aus der DE 28 19 002 C2 eine Rohrmühle mit einer Mahlkammer bekannt, die einen polygonalen Grundquerschnitt mit abgerundeten Ecken aufweist, bei der die Mahlkammerlänge bildenden Mahlplattenringe, in welchen die Vermahlung des Mahlgutes durch die fallende und rollende Bewegung der Mahlkörper erfolgt, von Ring zu Ring in Umfangsrichtung zueinander versetzt angeordnet sind. Ferner offenbart die AT 188.190 B eine Rohrmühle, deren Panzerung mit hubleistenähnlichen Fortsätzen an den Mahlplatten versehen ist, die zur Mitnahme des zu mahlenden Gutes bis zum Abwurfpunkt ausgebildet sind, wo durch Rutschen des Mahlgutes an der Mahlplatte vermieden werden soll und die Mahlung durch Schlagwirkung erreicht wird.

Die EP 0 524 396 A2 beschreibt ein Verfahren und eine Vorrichtung zum Aufbereiten von metallische und nichtmetallische Anteile enthaltenden Geräten, insbesondere Elektronikschrott, der zerkleinert und mehrstufig sortiert wird. Um eine weitgehende Rückgewinnung metallischer Werkstoffe in verschiedenen Endprodukten zu ermöglichen, wird das Aufgabegut einstufig und selektiv, prall- und/oder schlagbeansprucht zerkleinert und mehrstufig klassiert. Dabei sind einem Zerkleinerer mehrere Siebe mit von Sieb zu Sieb feineren Lochöffnungen nachgeschaltet. Die Prallzerkleinerung erfolgt bei der EP 0 524 396 A2 mit einem Shredder. Durch die Kombination und Hintereinanderschaltung verschiedener Klassier-, Magnetscheide- und Wirbelscheidestufen, sowie den Einsatz von Luftherden neben einem Eisenprodukt, einem Nichtmetallprodukt und einem Nichteisenmetallmischprodukt ein kupferhaltiges Mischprodukt erhalten, das mit Edelmetallen angereichert ist.

Die DE 25 17 487 A1 offenbart eine Anlage zur Rückgewinnung von Werkstoffen aus Industriemüll unter Verwendung eines Müllzerkleinerers, eines Magnetabscheiders und einer Einrichtung zur Abscheidung des flugfähigen Anteils vom übrigen Müll, sowie unter Verwendung von Zuförderern. Dabei ist eine Vorsortierstation zum manuellen Aussortieren von zu großen und/oder die Anlage beschädigenden Müllanteilen und am Ende der Anlage eine Vorrichtung zur Leichfraktion des flugfähigen Müllanteils vorgesehen. Die Anlage weist im Anschluss an eine Rohrmühle mit einer Trommel einen Abförderer mit einem Gebläse zum Abscheiden des flugfähigen Müllanteils auf.

Die US 5,632,380 A beschreibt ein System zur Wiedergewinnung von Eisenwerkstoffen aus Abfallmaterial. Das System weist dabei eine erste magnetische Trenneinrichtung, eine durch eine Rohrmühle gebildete gravitative Aufprallzerkleinerungseinrichtung und eine zweite magnetische Trenneinrichtung auf.

Die CH 587 680 A beschreibt ein Verfahren zur Homogenisierung, Mischung und Vermahlung von Müll, sowie eine Vorrichtung zur Durchführung des Verfahrens, wobei die Müllmasse kontinuierlich in eine drehende Trommelmühle gespeist wird und die kompostierbare Fraktion nach einer kurzen Verweilzeit der Müllmasse in der Trommelmühle durch einen mitrotierenden Siebkorb am Ende der Trommelmühle von der Müllmasse abgetrennt wird.

Aus der DE 43 19 989 A1 und der DE 41 00 346 A1 ist jeweils ein Verfahren zur Aufbereitung von Elektronikschrott bekannt, wobei nach einer manuellen Zerlegung der elektrischen Geräte und Sortierung der Hauptbestandteile nach geeigneten Fraktionen eine Vorzerkleinerung des Elektronikschrottes und eine Sortierung, sowie eine Nachzerkleinerung des vorzerteilten Restgutes mit nachfolgender Magnetabscheidung, elektrostatischer Abscheidung und schließlich einer Feinzerkleinerung mit nachfolgender Nasstrennung erfolgt. Eine Abtrennung durch eine Absaugeinrichtung anschließend an eine Aufprallzerkleinerung in einer Rohrmühle ist nicht vorgesehen.

Aufgrund gesetzlicher Vorgaben müssen Elektroaltgeräte vor einer mechanischen Zerkleinerung von Schadstoffen befreit werden. Schadstoffe sind beispielsweise Leiterplatten, Batterien, Akkus, Kondensatoren, öl-, asbest-, radioaktiv- und flüssigkeitshaltige Bauteile, quecksilberhaltige Bauteile, LCD-Displays mit Hintergrundbeleuchtung, sowie externe Kabeln. Mit bisherigen Anlagen und Verfahren können diese gesetzlichen Anforderungen nur ungenügend oder mit hohem Kos ten- und Arbeitsaufwand erfüllt werden. Eine vollständige manuelle Demontage aller schadstoffhaltigen Bauteile ist sehr zeit- und arbeitsintensiv. Der manuelle Ausbau von schadstoffhaltigen Bauteilen wird zumeist durch gealterte Befestigungen und nicht oder schwer lösbare Verbindungen erschwert. Eine Vorzerkleinerung der Geräte mittels Shredder ist keine befriedigende Lösung, da auf diese Weise schadstoffhaltige Bauteile zerstört und umweltschädliche Substanzen unkontrolliert freigesetzt werden würden.

Aufgabe der Erfindung ist es, diese Nachteile zu vermeiden und ein Verfahren, sowie eine Anlage vorzuschlagen, mit welcher auf möglichst einfache und wirtschaftliche Weise eine selektive Behandlung von unsortierten Abfallstoffen aus elektrischen und/oder elektronischen Altgeräten ermöglicht wird. Ein besonderes Augenmerk soll dabei auf eine umweltschonende Entfrachtung von Schadstoffen gelegt werden.

Erfindungsgemäß wird dies dadurch erreicht, dass die Drehzahl der prallkörperfreien Rohrmühle veränderbar ist, dass zumindest eine Trenneinrichtung durch zumindest ein mit der Rohrmühle mitrotierendes Trommelsieb gebildet ist und dass anschließend an das Trommelsieb eine Absaugeinrichtung angeordnet ist.

Die Zerkleinerung erfolgt nur dadurch, dass die in die Rohmühle eingebrachten Abfallstoffe gegeneinander prallen, wobei die Zerkleinerung durch die Fallenergie aufeinander prallender Abfallteile, wie Geräte, erfolgt. Es werden beim Gegenstand der vorliegenden Anmeldung somit keine abfallfremden losen Prallkörper oder Schlagwerkzeuge verwendet.

Vordefinierte ökoaktive Abfallbestandteile werden rein manuell oder zumindest teilweise automatisch aussortiert. Unter ökoaktiven Abfallbestandteilen werden in diesem Zusammenhang jene Abfallbestandteile verstanden, bei denen bei der Behandlung mit der ersten Zerkleinerungseinrichtung mit einer Freisetzung von gefährlichen Inhaltsstoffen zu rechnen ist. Die Definition ökoaktive Abfallbestandteile bezieht sich demnach nicht auf die Reaktivität von Substanzen oder deren Umweltrelevanz. Bei der Vorsortierung geht es somit vor allem darum, jene Gerätearten und Abfallbestandteile von den unsortierten Abfallstoffen abzutrennen, bei denen durch den Behandlungsschritt der gravitativen Schlagtrennung in der Rohrmühle Schadstoffe freigesetzt werden können. Bei ökoaktiven Geräten und Abfallbestandteilen handelt es sich beispielsweise um Geräte, die radioaktive Komponenten enthalten, um asbesthaltige Geräte, um quecksilberhaltige Geräte oder Bauteile, in denen Quecksilber in Bauteilen enthalten sind, die durch die mechanische Beanspruchung in der Rohrmühle zerstört werden könnten, z.B. Quecksilberschalter in Glasröhrenform, Leuchtstoffröhren und andere Gasentladungslampen, um Geräte mit LCD-Anzeigen, Geräte die Bildröhren enthalten, Geräte die Fluor-Chlor-Kohlenwasserstoffe oder andere Gase enthalten, Geräte die große Toner-Kartuschen enthalten und Geräte die Öle und andere Flüssigkeiten enthalten.

Bei der Vorsortierung werden parallel auch potentiell wiederverwendbare und zu vermarktende Geräte, z.B. Mobiltelefone, aussortiert.

Zur Feststellung von radioaktiven Komponenten werden die angelieferten Abfallstoffe im Rahmen einer Eingangskontrolle einer Radioaktivitätsmessung unterzogen.

Ökoaktive Geräte werden entweder an entsprechende Behandlungsschritte weitergeleitet oder einer manuellen Schadstoffentfrachtung mit händischer Demontage unterzogen. Vor allem Geräte mit radioaktiven Komponenten, asbesthaltige Geräte, Bildröhrengeräte, Kühl-, Gefrier- und Klimageräte werden an externe Behandlungsanlagen weitergeleitet.

Bei der manuellen Schadstoffentfrachtung werden die Geräte und/oder Geräteteile mit Hilfe geeigneter Werkzeuge so weit zerlegt, bis der Gehalt an ökoaktiven Bauteilen identifiziert werden kann. Liegen als ökoaktiv eingestufte Bauteile, wie Quecksilberschalter mit Glasröhren, Nassbatterien, größere Toner-Kartuschen, LCD-Anzeigen und Leuchtstoffröhren oder kleine Bildröhren vor, werden diese demontiert.

Die Hauptbeweggründe zur Einstufung dieser Bauteile als ökoaktive sind die potentielle Freisetzung von Quecksilber durch das Brechen des Glases von Quecksilberschaltern mit Glasröhrchen, die potentielle Freisetzung von Säuren und Laugen aus Nassbatterien, die potentielle Freisetzung von Farbtonern und/oder Staubbelastung durch staubförmige Schwarztoner aus größeren Toner-Kartuschen, sowie die potentielle Freisetzung von Quecksilber aus Leuchtstoffröhren, sowie Leuchtstoffröhren als Hintergrundbeleuchtung von größeren LCD-Bildschirmen.

Metall-Kunststoffummantelte Quecksilberschalter, Trockenbatterien, Toner-Cartridges aus Druckern oder Ähnliches und kleinere LCD-Anzeigen müssen nicht demontiert werden und fallen in dem hier definierten Sinne nicht unter die Bezeichnung "ökoaktive Bauteile", da diese nach der gravitativen Aufprall-Vorzerkleinerung als ganze Bauteile vorliegen und nicht zerstört werden.

Als "ökopassiv" eingestufte Bauteile, wie z.B. Batterien, Kondensatoren oder dergleichen, können im der ersten Zerkleinerungseinrichtung zugeführten Abfallmaterial verbleiben, um nach erfolgter erster Zerkleinerung der Geräte separiert zu werden.

Im Rahmen der händischen Demontage kann auch eine Selektion von Werkstoffen, wie z.B. Leiterplatten, Kabel, Aluminium, erfolgen. Schadstoffentfrachtete Geräte, Metall-Kunststoffverbunde und Ähnliches werden als Shreddervormaterial gesammelt und mit diesem aufgearbeitet.

Im Rahmen der Vorsortierung werden freiliegende schadstoffhaltige Bauteile erfasst und Bauteile, aus denen gegebenenfalls Schadstoffe oder Störstoffe freigesetzt werden könne, demontiert. Auch externe Kabel können im Rahmen der Vorsortierung entfernt werden.

Die ökopassiven Abfallbestandteile werden der nach dem Prinzip der Aufprallzerkleinerung gravitativ arbeitenden Vorzerkleinerungseinrichtung, nämlich einer Rohrmühle ohne abfallfremde Prallkörper, zugeführt. In der Vorzerkleinerungseinrichtung wird eine gezielte selektive Zerkleinerung als Vorbereitung für eine spätere Schadstoffentfrachtung vorgenommen. Dabei werden Gehäuse, für deren Entfernung bei der händischen Demontage erfahrungsgemäß der größte Aufwand notwendig ist, mechanisch von den Geräten gelöst. Weiters werden auch Baugruppen und Bauteile voneinander gelöst. Die eingebrachte Energie ist bei einer Rohrmühle wesentlich geringer als beispielsweise bei einem Shredder. Durch diesen dosierten Energieeintrag für die Vorzerkleinerung wird eine Zerstörung von Bauteilen, wie Batterien, Kondensatoren oder dergleichen mit umweltrelevanten Inhalten vermieden.

Wesentlich ist, dass bei der selektiven Vorzerkleinerung in der ersten Zerkleinerungseinrichtung vor allem eine Schlagbeanspruchung ausgeübt wird, wobei Geräte und Bauteile der Abfallstoffe gegeneinander schlagen. Für eine dosierte gezielte selektive Zerkleinerung ist es von Vorteil, wenn die Rohrmühle eine Trommel mit im Wesentlichen zylindrischer, vorzugsweise glatter Innenwand aufweist. Gegebenenfalls kann auch vorgesehen sein, dass die Innenwand der Rohrmühle zumindest ein Prallelement, vorzugsweise zumindest eine Schlagleiste aufweist, um den Zerkleinerungsgrad zu verbessern. Zum Unterschied zu einem Shredder erfolgt somit kein Kantenabschlag und keine Schneidebeanspruchung der Geräte.

Die Schlagleisten sind bevorzugt etwa parallel zur Drehachse angeordnet. Es kann aber auch vorgesehen sein, dass die Schlagleiste im Wesentlichen schraubenförmig gestaltet ist. Weiters können Leitbleche vorgesehen sein, um die Bewegungsrichtung der Abfallstoffe zu definieren.

Die Drehachse der Rohrmühle ist - zumindest in einer Betriebsstellung - im Wesentlichen horizontal ausgerichtet. Um die Verweilzeit der Abfallstoffe und den Zerkleinerungsgrad in der Rohrtrommel zu beeinflussen, kann vorgesehen sein, dass die Drehachse der Rohrmühle durch eine Schwenkeinrichtung veränderbar ist. Durch Schwenken der Rohrtrommel kann somit erreicht werden, dass die Abfallstoffe ansteigend - oder gegebenenfalls abfallend - die Rohrmühle passieren. Der Vorschub der Abfallstoffe in der Rohrmühle wird dabei im Wesentlichen durch das nachfolgende in die Rohrmühle eingebrachte Abfallmaterial verursacht.

Die zerkleinerten, die Rohrmühle verlassenden Abfallstoffe werden in Abhängigkeit ihrer Eigenschaften in einzelne Fraktionen aufgeteilt. Die Trennung kann dabei aufgrund der Größe und/oder des Volumens der Abfallteile, aufgrund des Gewichtes und/oder der Dichte der Abfallteile oder beispielsweise aufgrund der magnetischen Eigenschaften Abfallbestandteile erfolgen.

Das Abfallmaterial wird nach der selektiven Zerkleinerung in der Vorzerkleinerungseinrichtung Sortier- und/oder Trenneinrichtung zugeführt. Dabei kann anschließend an die Rohrmühle eine Siebtrommel vorgesehen sein, welche Material entsprechend der Siebgröße von der Restfraktion abtrennt. Durch weitere Trenneinrichtungen - etwa Rüttelsiebe oder ähnliche Siebvorrichtungen zum Zwecke der Fraktionierung - können Kleinteile abgetrennt und auf Sortierförderbänder gebracht werden, um im abgetrennten Material enthaltene schadstoffhaltige Bauteile händisch aussortieren zu können.

Schadstoffhaltige Bauteile, die sich noch in Verbunden oder Geräteteilen befinden, werden - wenn durch einfache Handgriffe möglich (z.B. Kondensator auf Leiterplatte oder nur mehr durch Kabel mit anderen Materialien verbunden) - am Sortierband direkt abgetrennt. Falls sich das Entfernen der schadstoffhaltigen Bauteile nicht so leicht bewerkstelligen lässt, werden die Verbunde oder Geräteteile - nach Abschätzung des Sortierpersonals - entweder dem Rücklauf für den Vorzerkleinerer oder der händischen Demontage zusortiert. Die Schadstoffe werden in entsprechenden Boxen oder Stapelbehältern, sowie in geeigneten Zwischen- und Lagerbehältern gelagert.

Alternativ oder zusätzlich zur manuellen Sortierung können automatische Sortiersysteme, beispielsweise optische Identifikationssysteme und/oder Nah-Infrarot-Spektroskopie und/oder magnetische Materialtrennsysteme eingesetzt werden.

Am Ausgang aus der Rohrmühle wird die Feinfraktion und eventuelle vorzugsweise gasförmige Schadstoffe über eine pneumatische Absaugeinrichtung von der Restfraktion abgetrennt.

Bei der verbleibenden Restfraktion aus der Rohrmühle handelt es sich vor allem um größere abgeschlagene Gehäuseteile und um Geräteteile. Aus dieser Restfraktion können z.B. Kunststoffteile und Leiterplatten für die direkte Weiterleitung an eine externe Behandlung aussortiert werden. Für die verbleibenden Geräte bzw. Geräteteile bestehen die folgenden Optionen:
Handelt es sich um noch geschlossene Geräte und wird von einem potentiellen Gehalt an ökoaktiven Bauteilen ausgegangen, oder sind diese Geräte unbekannt, werden diese Geräte zur händischen Demontage weitergeleitet. Liegen Geräte oder Geräteteile geöffnet vor und sind Bauteile mit gefährlichen Inhaltsstoffen enthalten, bieten sich die folgenden Optionen:
   Sind diese Bauteile mit einfachen Handgriffen zu entfernen (z.B. Akkumulatorpackungen), kann die Schadstoffentfrachtung sofort erfolgen und die schadstoffentfrachteten Geräte dem Shredder-Vormaterial zugeordnet werden; wenn die Demontage mit einem höherem Aufwand erfolgen muss, können diese Geräte oder Geräteteile an die händische Demontage weitergeleitet werden; liegen nur ökopassive Bauteile vor, können diese Geräte bzw. Geräteteile als Rücklauf dem Vorzerkleinerer-Vormaterial wieder zugeordnet werden; liegen die Geräte geöffnet vor und wird von keinem Gerät und Bauteilen mit gefährlichen Inhaltsstoffen ausgegangen, können diese Geräteteile entweder als Rücklauf dem Vorzerkleinerer-Vormaterial oder dem Nachzerkleinerer-Vormaterial zugeordnet werden.
   Das vorzerkleinerte Material aus der selektiven Zerkleinerung im Vorzerkleinerer wird in Sortierfraktionen aufgetrennt und auf Sortierbänder geleitet. Aus diesen Sortierfraktionen können darin enthaltene schadstoffhaltige Bauteile händisch aussortiert werden.

Die Sortierfraktionen enthalten dabei - der Größe geordnet - folgende abgeschlagene Bauteile:
1) Kleinstteilfraktion - z.B. Knopfzeilen;
2) Kleinteilfraktion - z.B. Leiterplattenbruchstücke, kleine Batterien und Akkumulatoren, kleine Kondensatoren;
3) Mittelteilfraktion - z.B. Kabelstücke, Leiterplatten bzw. -teile, größere Kondensatoren, größere Batterien und Akkumulatoren, Druckerpatronen, kleinere LCDs;
4) Großteilfraktion - z.B. Geräte und Teile, interne Kabel, Leiterplatten, große Kondensatoren, Batterie- bzw. Akkupackungen, größere Druckerpatronen, größere LCDs.

Diese Bauteile werden im Rahmen der Sortierung der Sortierfraktionen nach den folgenden Bauteilgruppen erfasst:
a) Batterien und Akkumulatoren;
b) Kondensatoren;
c) Ummantelte quecksilberhaltige Bauteile;
d) Druckerpatronen;
e) LCD-Anzeigen und LCD-Bauteilverbunde;
f) Leitplatten;
g) Kabel.

Kunststoffteile, unbestückte Leiterplattenbruchstücke und innere Kabelteile werden nicht sortiert, sondern in definierten Fraktionen der nachfolgenden mechanischen Separation abgetrennt und nachfolgend sortiert.

Verbleiben nach der Auftrennung im Vorzerkleinerer Bauteilgruppen mit schadstoffhaltigen Bauteilen in Aufarbeitungs-Zwischenfraktionen, werden diese, wenn sie durch einfache Handgriffe abgetrennt werden können (z.B. Kondensator auf Leiterplatte oder nur mehr durch Kabel mit anderen Materialien verbunden) und je nach Zeitbudget (z.B. auch bestimmt durch die Auslastung des Sortierbandes), sofort abgetrennt. Andernfalls werden sie entweder abermalig in den Vorzerkleinerer eingebracht (Zuordnung zu Rücklauf) oder für die interne oder externe manuelle Demontage erfasst (Sortierfraktion).

Die nach der Sortierung vorliegenden schadstoffentfrachteten Aufarbeitungs-Zwischenfraktionen werden anschließend in einer Separationsanlage weiter separiert. Im Rahmen dieser nachfolgenden Separations- und Sortierschritte ist eine Abtrennung von Kabeln, Leiterplatten und Kunststoffen, sowie eine Kontrolle auf gegebenenfalls verbliebene Bauteile möglich.

Die erfindungsgemäße Anlage ist das Verfahren eignet sich nicht zur Behandlung von Altgeräten, sondern auch zur Behandlung von Neugeräten beispielsweise aus Über- und Ausschussproduktionen. Neben Elektroklein-, -mittel- und -großgeräten können auch Gartengeräte, Werkzeuge, Spiel-, Sport- und Freizeitgeräte, Telekommunikationsgeräte, Unterhaltungselektronik, elektrische und elektronische Werkzeuge, Instrumente und Bauteile oder dergleichen behandelt werden.

Die Erfindung wird im Folgenden anhand der Figuren näher erläutert. Es zeigen
- Fig. 1: die erfindungsgemäße Sortieranlage in einer ersten Ausführungs- variante in einer Seitenansicht;
- Fig. 2: diese Sortieranlage in einer Draufsicht;
- Fig. 3: eine erfindungsgemäße Sortieranlage in einer zweiten Aus- führungsvariante in einer Seitenansicht;
- Fig. 4: diese Sortieranlage in einer Draufsicht;
- Fig. 5: eine Vorzerkleinerungseinrichtung in einem Schnitt gemäß der Li- nie V-V in Fig. 6;
- Fig. 6: diese Vorzerkleinerungseinrichtung in einem Schnitt gemäß der Li- nie VI-VI in Fig. 5;
- Fig. 7: die Prozessabschnitte des erfindungsgemäßen Verfahrens;
- Fig. 8: den Prozessabschnitt der Vorsortierung;
- Fig. 9: den Prozessabschnitt der händischen Demontage; und
- Fig. 10: den Prozessabschnitt der Vorzerkleinerung.

Die Anlage 2 zur selektiven Behandlung von unsortierten Abfallstoffen aus elektrischen und/oder elektronischen Altgeräten, insbesondere von Elektroklein- und -mittelgeräten, weist ein Abfallsortiersystem 4 mit einer Abfallbehandlungsstraße 6 auf, in welcher ein erstes Sortiermittel 8 zur Vorsortierung, eine selektive Vorzerkleinerungseinrichtung 10, sowie mehrere zweite Sortiermittel 12 zur Nachsortierung angeordnet ist. Weiters ist zwischen der Vorzerkleinerungseinrichtung 10 und den zweiten Sortiermitteln 12 zumindest eine Trenneinrichtung 14 zur Auftrennung der vorzerkleinerten Abfallstoffe in Fraktionen F₁, F₂, F₃, F₄, F₅ vorgesehen, welche in den Ausführungsbeispielen durch zumindest ein Trommelsieb 16 und Rüttelsiebe 18 gebildet ist.

In den einfachsten Ausführungsformen sind die Sortiermittel 8, 12 manueller Art, d.h., dass speziell eingeschultes Personal 20 die Sortierung der Abfallstoffe nach vordefinierten Kriterien vornimmt, wobei die Abfallstoffe durch Sortierförderbände 9, 13 an den Personen 20 vorbeigeführt werden.

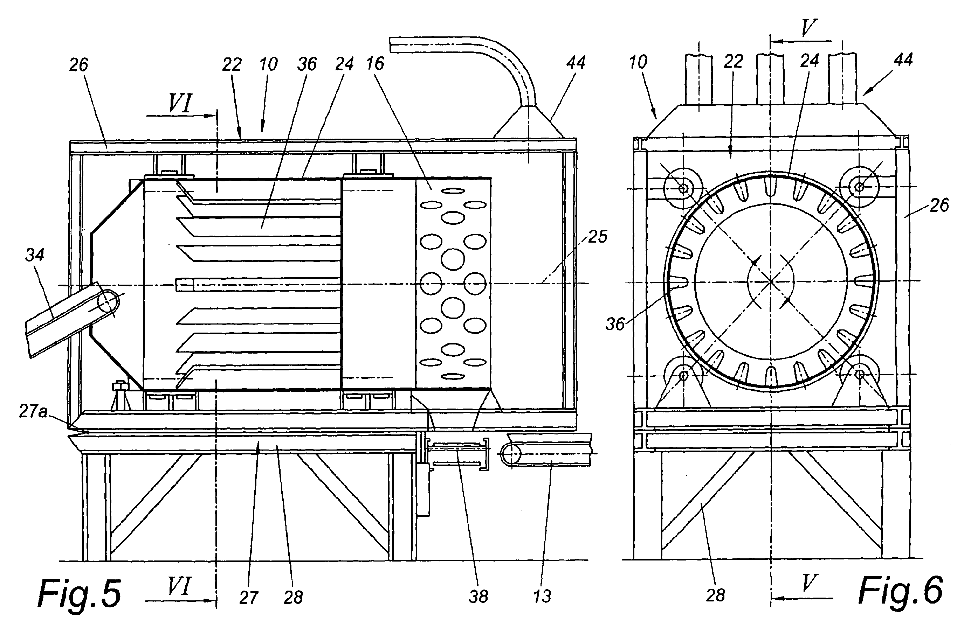

Die Vorzerkleinerungseinrichtung 10 beruht auf dem Prinzip der gravitativen Aufprallzerkleinerung und wird in den Ausführungsbeispielen durch eine Rohrmühle 22 ohne abfallfremde lose Prallkörper realisiert, deren annähernd zylindrische Trommel 24 um eine zumindest in einer Betriebslage etwa horizontal ausgerichteten Drehachse 25 drehbar ist. Wie aus den Figuren 5 und 6 zu entnehmen ist, ist das Gehäuse 26 um eine Achse 27a an einem Gestell 28 kippbar gelagert, wodurch die Drehachse 25 durch eine Schwenkeinrichtung 27 in Bezug zu einer Horizontalen geneigt werden kann. Dadurch kann die Verweilzeit der Abfallstoffe in der Rohrmühle 22, welche im Allgemeinen zwischen 1 bis 5 Minuten liegt, sowie der Zerkleinerungsgrad der Abfallstoffe, verändert werden.

Die in einem Behälter 30 gesammelten Abfallstoffe aus elektronischen und/oder elektrischen Altgeräten werden dem Sortierförderband 9 zugeführt und nach vordefinierten Gesichtspunkten durch die Person 20 vorsortiert. Dabei werden jene hier als ökoaktive Abfallbestandteile bezeichneten Geräte und/oder Bauteilgruppen manuell aussortiert, welche Bauteile oder Inhaltsstoffe enthalten können, die durch die mechanische Beanspruchung in der Vorzerkleinerungseinrichtung 10 freigesetzt werden könnten. Diese Geräte und/oder Bauteilgruppen werden an eine externe Behandlung oder zur händischen Demontage weitergeleitet. Mit 32 sind Behältnisse zur Aufnahme der ausgeschiedenen Geräte und/oder Bauteilgruppen bezeichnet.

Die verbleibenden vorsortierten Abfallstoffe, insbesondere Geräte und/oder Bauteilgruppen, werden über eine Fördereinrichtung 34 der Vorzerkleinerungseinrichtung 10 zugeführt und axial in die Rohrmühle 22 eingebracht. In der Rohrmühle 22 werden die Elektro-Altgeräte durch eine gezielte selektive Vorzerkleinerung für eine Schadstoffentfrachtung vorbereitet. Gehäuse, für deren Entfernung bei der händischen Demontage erfahrungsgemäß der größte Aufwand notwendig ist, werden hier mechanisch von den Geräten gelöst. Weiters werden auch Baugruppen und Bauteile voneinander gelöst.

Wesentlich ist, dass beim Vorzerkleinern vor allem eine Schlagbeanspruchung ausgeübt wird, wobei Geräte auf Schlagleisten 36 und gegeneinander schlagen. Es erfolgt kein Kantenabschlag und keine Schneidbeanspruchung der Geräte. Die Schlagleisten 36 sind an der Innenwand der Trommel 24 angeordnet und verlaufen im Ausführungsbeispiel im Wesentlichen in Richtung der Drehachse 25. Die Schlagleisten 36 können aber auch schraubenförmig geformt sein und somit den Vorschub der Abfallstoffe innerhalb der Trommel 24 fördern.

Anschließend an die Trommel 24 ist ein fest mit dieser verbundenes Trommelsieb 16 angeordnet, wodurch eine grobe Aufteilung der vorzerkleinerten Abfallstoffe erfolgt. Gegebenenfalls können auch mehrerer Trommelsiebe mit unterschiedlicher Sieblochung hintereinander angeordnet sein. Die Abfallbehandlungsstraße 6 ist anschließend an die Trenneinrichtung 14 in zumindest zwei Abfallbehandlungszweige 6a, 6b für Grobfraktion F₅ und wenigere grobe bzw. feinere Fraktionen F₄, F₃, F₂, F₁ aufgeteilt. Die durch das Trommelsieb 16 abgetrennten Abfallstoffe werden über eine Fördereinrichtung 38 einer Siebeinheit 40 mit mehreren Rüttelsieben 18 mit unterschiedlichen Sieblochungen zugeführt und dadurch in verschiedene Fraktionen weiter aufgeteilt. Den Fraktionen F₁, F₂, F₃, F_{4,}, F₅ können zweite Sortiermittel 12 zugeordnet sein, wobei die Fraktionen F₁, F₂, F₃, F_{4,}, F₅ nach vordefinierten Gesichtspunkten durch Personen 20 händisch aussortiert werden. Die aussortierten Bauteile werden in Behältnisse 42 abgeworfen.

Bei der das Trommelsieb 16 axial passierenden Restfraktion F₅ handelt es sich vor allem um größere abgeschlagene Gehäuseteile und um Geräteteile. Aus dieser Restfraktion F₅ können z.B. Kunststoffteile und Leiterplatten für die direkte Weiterleitung an eine externe Behandlung aussortiert werden.

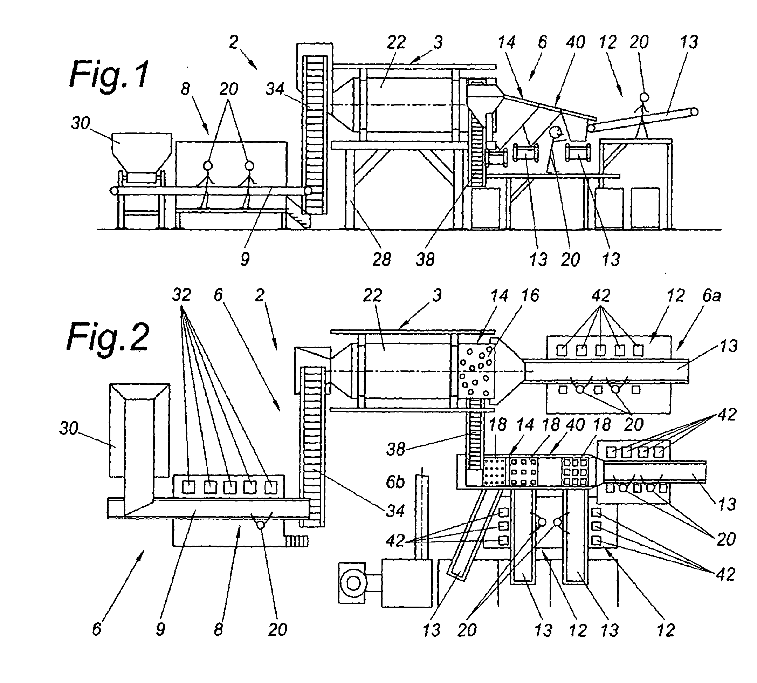

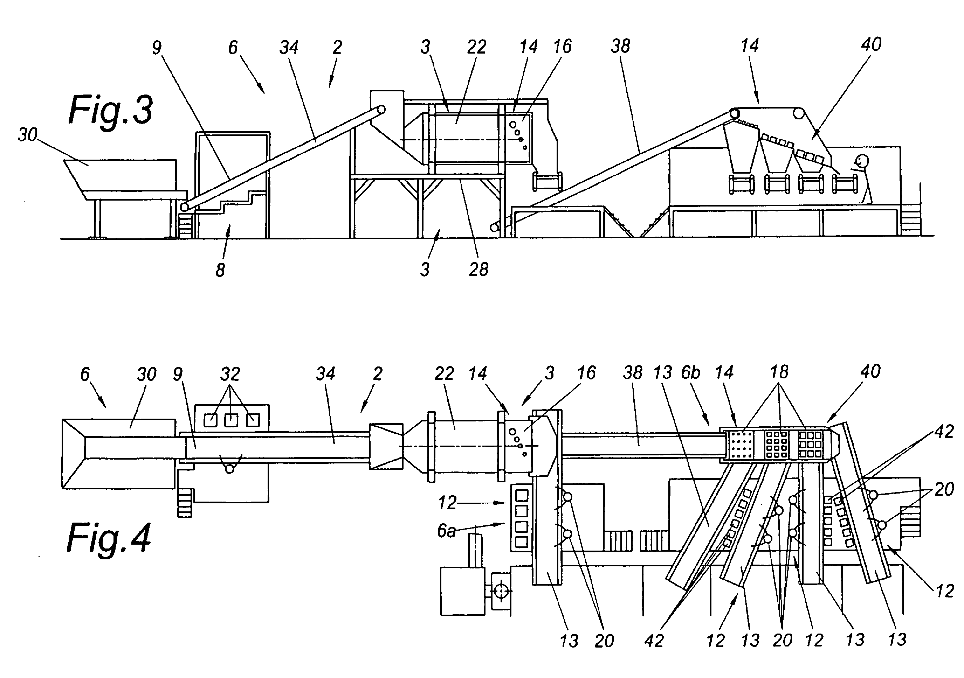

Die Fig. 1 und Fig. 2 zeigen eine Anlage 2 mit einem sehr kompakt angeordneten Abfallsortiersystem 4 mit einer mehrfach umgelenkten Abfallbehandlungsstraße 6. Die in den Fig. 3 und Fig. 4 gezeigte Anlage 2 unterscheidet sich davon dadurch, dass das Abfallsortiersystem 4 langgestreckt ausgebildet ist und die Abfallbehandlungsstraße 6 im Wesentlichen in der Linie der Drehachse 25 der Rohrmühle 22 angeordnet ist. Dies ermöglicht eine schlankere Bauweise.

Wie aus den Fig. 5 und Fig. 6 ersichtlich ist, wird anschließend an das Trommelsieb 16 durch eine Absaugeinrichtung 44 Feinfraktion F₆ von den vorzerkleinerten Abfallstoffen abgetrennt.

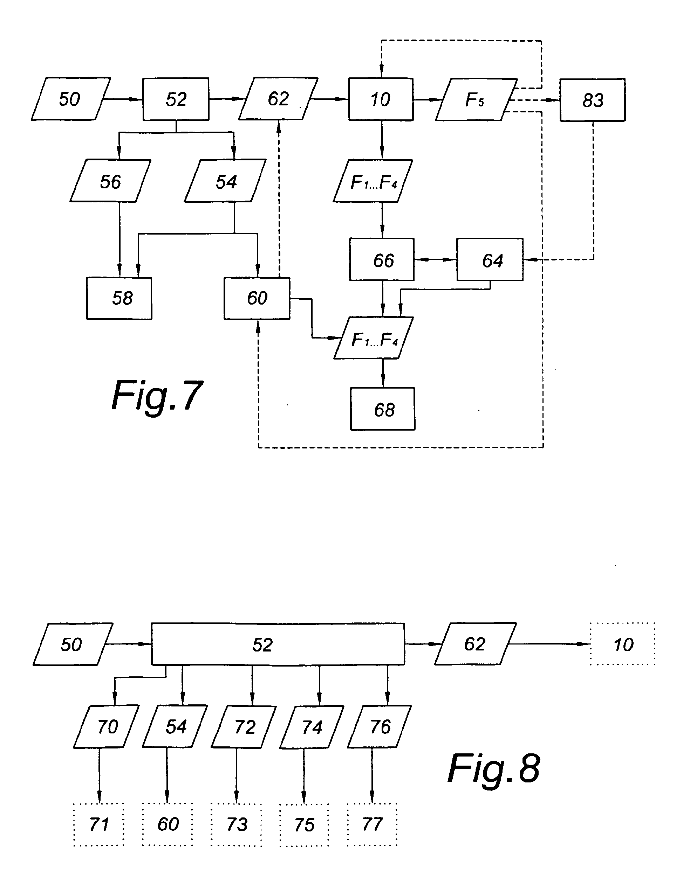

Fig. 7 gibt einen Überblick über das Verfahren zur selektiven Behandlung von unsortierten Abfallstoffen aus elektrischen und/oder elektronischen Altgeräten mit selektiver gravitativer Vorzerkleinerung.

Ein definiertes Eingangsmaterial aus Abfallstoffen 50 wird der Vorsortierung 52 unterworfen. Als Abfallstoffe 50 eignen sich vor allem Elektroklein- und -mittelgeräte. Um den Aufschlageffekt in der Vorzerkleinerungseinrichtung 10 zu verstärken, können aber auch gezielt Großgeräte zugesetzt werden. Geräte, bei denen die Gefahr besteht, dass bei der gravitativen Aufprallzerkleinerung Schadstoffe freigesetzt werden, können nicht aufgearbeitet werden. Dazu zählen Kühl-, Gefrier- und Klimageräte, Bildschirmgeräte bzw. Bildröhren und Geräte mit flüssigen Inhaltsstoffen. Diese ökoaktiven Geräte 54 werden im Rahmen der Vorsortierung 52 aussortiert. Unter dem Begriff ökoaktive Geräte werden hier auch Geräte bezeichnet, welche radioaktive oder asbesthaltige Komponenten enthalten, welche quecksilberhaltige Bauteile enthalten, die durch mechanische Beanspruchung in der Vorzerkleinerungseinrichtung 10 zerstört werden könnten, Geräte mit LCD-Anzeigen, Geräte die Bildröhren enthalten, Geräte die Fluor-ChlorKohlenwasserstoff oder andere Gase enthalten, Geräte die große Druckerpatronen enthalten, Geräte die Öle und andere Flüssigkeiten enthalten.

Parallel dazu werden potentiell wiederverwendbare und zu vermarktende Geräte einer externen Behandlung 58 zugeführt. Ökoaktive Geräte 54 werden entweder einer externen Behandlung 58 zugeführt oder einer händischen Demontage 60 unterzogen. Das nicht aussortierte Vorzerkleinerungsmaterial 62 wird der Vorzerkleinerungseinrichtung 10 zugeführt. Durch das Trommelsieb 16 erfolgt eine Auftrennung in mittlere und kleine Fraktionen F₁, F₂, F₃, F₄, und in eine große Fraktion F₅. Nach Separation 64 und Nachsortierung 66 erfolgt eine Aufteilung der Fraktionen F₁, F₂, F₃, F_{4,}, **F₅** zur weiteren externen Behandlung, Verwertung und Beseitigung 68.

Fig. 8 zeigt den Prozessabschnitt der Vorsortierung 52 im Detail. Dabei werden Kühl-, Gefrier- und Klimageräte aussortiert und der späteren Kühlgeräteaufbereitung 71 zugeführt. Ökoaktive Geräte 54 werden der händischen Demontage 60 zugeführt. Bildschirmgeräte 72 mit Kathodenstrahlröhren werden zur späteren Bildröhrenaufbereitung 73 aussortiert. Genauso werden freiliegende schadstoffhaltige Teile 74 für die entsprechende Verwertung bzw. Beseitigung 75 ausgeschieden. Bei Vorhandensein externer Kabel 76 können diese ebenfalls im Rahmen der Vorsortierung 52 abgetrennt und zur späteren mechanischen Aufbereitung 77 gesammelt werden.

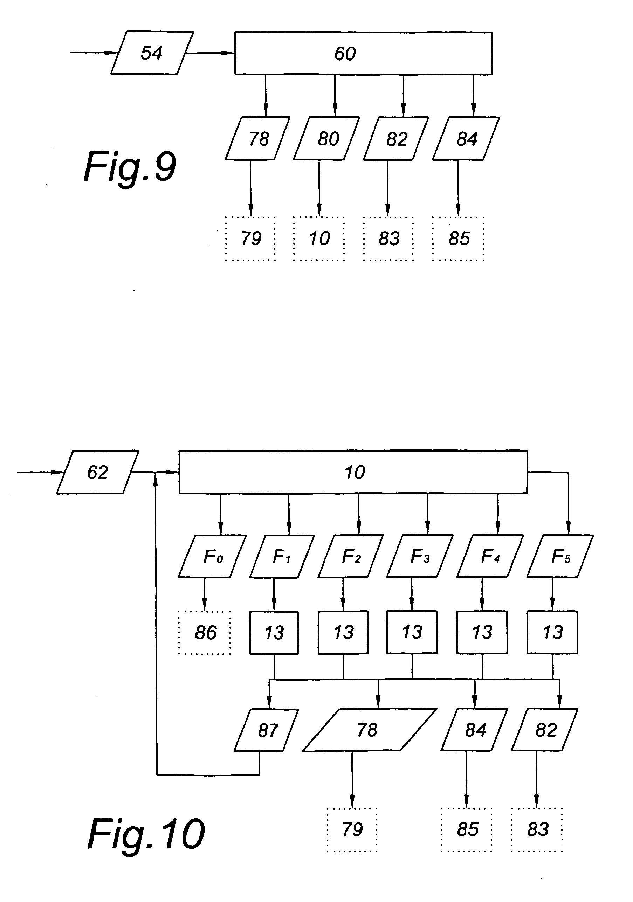

Fig. 9 zeigt de Prozessabschnitt der händischen Demontage 60 ökoaktiver Bauteile 54 im Detail. Bei der händischen Demontage 60 werden schadstoffhaltige Teile 78, wie Quecksilberschalter mit Glasröhrchen, Nassbatterien, größere Druckerpatronen, LCD-Anzeigen und Leuchtstoffröhren oder kleine Bildröhren demontiert und einer entsprechenden Verwertung bzw. Beseitigung 79 zugeführt. Als ökopassiv eingestufte Bauteile, welche bei der nachfolgenden Vorzerkleinerung keine Schadstoffe freisetzen, wie z.B. Batterien, Kondensatoren, Leiterplatten oder dergleichen, können im Vormaterial 80 für die Vorzerkleinerungseinrichtung 10 verbleiben und mit diesem ausgearbeitet und anschließend separiert werden. Es kann aber auch eine händische Demontage dieser Bauteile erfolgen. Anlässlich der händischen Demontage 60 wird auch schadstofffreies Vormaterial 82 für die nachfolgende Nachzerkleinerung 83, beispielsweise mit einem Shredder, vorbereitet. Im Rahmen der händischen Demontage 60 kann auch eine Selektion 84 von Werkstoffen, wie z.B. Leiterplatten, Kabel, Aluminium, etc., erfolgen und einer weiteren Verwertung 85 zugeführt werden.

Fig. 10 zeigt den Prozessabschnitt der Vorzerkleinerung 63 in der Vorzerkleinerungseinrichtung 10 im Detail. Mittels der Absauganlage 44 wird Feinfraktion F₀ aus dem vorzerkleinerten Abfallstoffen abgetrennt und einer Feinkorntrennanlage 86 zugeführt. Durch das Trommelsieb 16 und die Rüttelsiebe 18 gebildete Trenneinrichtungen 14 trennen die vorzerkleinerten Abfallstoffe in Fraktionen F₁, F₂, F₃, F_{4,}, **F₅** auf. Auf den Sortierförderbändern 13 erfolgt eine Nachsortierung der Fraktionen F₁, F₂, F₃, F_{4,}, F₅ wobei schadstoffhaltige Bauteile 78 aussortiert und einer entsprechenden Verwertung bzw. Beseitigung 79 zugeführt werden. Schadstofffreies Vormaterial 82 wird der Nachzerkleinerung 83 zugeführt. Schadstoffentfrachtete Sortierfraktionen 84 werden für die spätere Verwertung 85 gesammelt. Unzureichend zerkleinerte Abfallstoffe 87 werden zur nochmaligen Vorzerkleinerung der Vorzerkleinerungseinrichtung 10 rückgeführt.

Im Vergleich mit einem Shredder, welcher beispielsweise eine Antriebsleistung von 1000 kW aufweist, weist die durch die Rohrmühle 22 gebildete Vorzerkleinerungseinrichtung 10 eine wesentlich geringere Antriebsleistung von beispielsweise 30 kW auf. Durch Einsatz der Vorzerkleinerungseinrichtung 10 kann der manuelle Arbeitsaufwand für das Zerlegen, Trennen und Aussortieren der Altgeräte wesentlich vermindert und eine weitgehende Schadstoffentfrachtung des rückgewonnen Materials erreicht werden.

Die Erfindung ist nicht nur auf die Abfallbehandlung von elektronischen oder elektrischen Altgeräten beschränkt.

Vielmehr eignet sich die erfindungsgemäße Anlage und das erfindungsgemäße Verfahren in besonders vorteilhafter Weise auch zur Behandlung von auszuscheidenden Neugeräten, beispielsweise aus Über- und Ausschussproduktionen. Neben Elektroklein-, -mittel- und -großgeräten können auch Gartengeräte, Werkzeuge, Spiel-, Sport- und Freizeitgeräte, Telekommunikationsgeräte, Unterhaltungselektronik, elektrische und elektronische Werkzeuge, Instrumente und Bauteile oder dergleichen abfallbehandelt werden.

## Patentansprüche

1. Anlage (2) zur selektiven Behandlung von unsortierten oder vorsortierten Abfallstoffen (50), Teilen, Bauteilen und/oder Stoffen, insbesondere aus elektrischen und/oder elektronischen Geräten, vorzugsweise Altgeräten, mit einem Abfallsortiersystem (4) mit zumindest einer Abfallbehandlungsstraße (6), mit zumindest einem Sortiermittel (8, 12) und zumindest einer selektiven mechanischen Vorzerkleinerungseinrichtung (10), welche in der Abfallbehandlungsstraße (6) anschließend an zumindest ein erstes Sortiermittel (8) zum Aussortieren von definierten ökoaktiven Abfallbestandteilen und/oder von anderen definierten Komponenten und Teilen abgeordnet ist, wobei die mechanische Vorzerkleinerungseinrichtung (10) eine Einrichtung zur gravitativen Aufprallzerkleinerung ist und durch eine Rohrmühle (22) gebildet ist und wobei - bezogen auf den Abfallstrom in der Abfallbehandlungsstraße (6) - stromabwärts der Vorzerkleinerungseinrichtung (10) zumindest eine Trenneinrichtung (14) zum Auftrennen des vorzerkleinerten Materials in Fraktionen (F₀, F₁, F₂, F₃, F₄, F₅) angeordnet ist, **dadurch gekennzeichnet, dass** die Drehzahl der prallkörperfreien Rohrmühle (22) veränderbar ist, dass zumindest eine Trenneinrichtung (14) durch zumindest ein mit der Rohrmühle (22) mitrotierendes Trommelsieb (16) gebildet ist und dass anschließend an das Trommelsieb (16) eine Absaugeinrichtung (44) angeordnet ist.

2. Anlage (2) nach Anspruch 1, **dadurch gekennzeichnet, dass** die Abfallbehandlungsstraße (6) anschließend an die Trenneinrichtung (14) in zumindest zwei Abfallbehandlungszweige (6a, 6b), vorzugsweise in einen ersten Abfallbehandlungszweig (6a) für Grobfraktion (F₅) und zumindest einen zweiten Abfallbehandlungszweig (6b) für feinere Fraktion (F₁, F₂, F₃, F_{4,}) aufgeteilt ist.

3. Anlage (2) nach Anspruch 2, **dadurch gekennzeichnet, dass** in zumindest einem Abfallbehandlungszweig (6a, 6b) zumindest ein zweites Sortiermittel (12) zum Nachsortieren angeordnet ist.

4. Anlage (2) nach einem der Ansprüche 1 bis 3, **dadurch gekennzeichnet, dass** zumindest eine Trenneinrichtung (14) durch zumindest eine Siebvorrichtung, vorzugsweise ein Rüttelsieb (18) gebildet ist, wobei besonders vorzugsweise zumindest zwei Rüttelsiebe (18) zu einer Siebeinheit (40) verbunden sind.

5. Anlage (2) nach einem der Ansprüche 1 bis 4, **dadurch gekennzeichnet, dass** die Rohrmühle (22) eine in zumindest einer Betriebslage im Wesentlichen horizontal anordbare Drehachse (25) aufweist.

6. Anlage (2) nach einem der Ansprüche 5, **dadurch gekennzeichnet, dass** die Rohrmühle (22) durch eine Schwenkeinrichtung (27) um eine etwa normal zur Drehachse (25) ausgebildeten Achse (27a) kippbar gelagert ist.

7. Anlage (2) nach einem der Ansprüche 1 bis 6, **dadurch gekennzeichnet, dass** vorzugsweise im Austrittsbereich der Abfallstoffe aus der selektiven mechanischen Vorzerkleinerungseinrichtung (10) eine Absaugeinrichtung (44) für Feinanteile und/oder vorzugsweise gasförmige Schadstoffe angeordnet ist.

8. Anlage (2) nach einem der Ansprüche 1 bis 7, **dadurch gekennzeichnet, dass** die Rohrmühle (22) eine vorzugsweise im wesentlichen zylindrische Trommel (24) mit einer vorzugsweise im Wesentlichen glatten Innenwand aufweist.

9. Anlage (2) nach einem der Ansprüche 8, **dadurch gekennzeichnet, dass** die Innenwand der Trommel (24) zumindest ein Prallelement, vorzugsweise zumindest eine Schlagleiste (36) aufweist.

10. Anlage (2) nach Anspruch 9, **dadurch gekennzeichnet, dass** die Schlagleiste (36) zumindest abschnittsweise im Wesentlichen parallel zur Drehachse (25) angeordnet ist.

11. Anlage (2) nach Anspruch 9 oder 10, **dadurch gekennzeichnet, dass** die Schlagleiste (36) zumindest abschnittsweise im Wesentlichen schraubenförmig gestaltet ist.

12. Anlage (2) nach einem der Ansprüche 9 bis 11, **dadurch gekennzeichnet, dass** im Inneren der Trommel (24) zumindest ein Leitblech angeordnet ist.

13. Anlage (2) nach einem der Ansprüche 1 bis 12, **dadurch gekennzeichnet, dass** das erste und oder zweite Sortiermittel (8, 12) zumindest ein Sortierförderband (9, 13) zum manuellen und/oder automatischen Aussortieren von Schad- und Werkstoffen, sowie definierten Abfallbestandteilen aufweist.

14. Anlage (2) nach einem der Ansprüche 1 bis 13, **dadurch gekennzeichnet, dass** das erste und/oder zweite Sortiermittel (8, 12) zum automatischen Aussortieren ein optisches Identifikationssystem aufweist.

15. Anlage (2) nach einem der Ansprüche 1 bis 14, **dadurch gekennzeichnet, dass** das erste und/oder zweite Sortiermittel (8, 12) zum automatischen Aussortieren ein Nah-Infrarot-Spektroskop-System aufweist.

16. Anlage (2) nach einem der Ansprüche 1 bis 15, **dadurch gekennzeichnet, dass** das erste und/oder zweite Sortiermittel (8, 12) zum automatischen Aussortieren eine pneumatische oder mechanische Abwurfeinrichtung aufweist.

17. Anlage (2) nach einem der Ansprüche 1 bis 16, **dadurch gekennzeichnet, dass** zur Aussortierung und/oder zur Trennung in Fraktionen eine magnetische Materialtrenneinrichtung vorgesehen ist.

18. Anlage (2) nach einem der Ansprüche 1 bis 17, **dadurch gekennzeichnet, dass** zur Aussortierung und/oder zur Trennung in Fraktionen zumindest ein elektrostatische Separator vorgesehen ist.

19. Anlage (2) nach einem der Ansprüche 1 bis 18, **dadurch gekennzeichnet, dass** zur Aussortierung und/oder zur Trennung in Fraktionen zumindest Wirbelstromscheider, Windsichter und/oder Luftherd vorgesehen ist.

20. Anlage (2) nach einem der Ansprüche 1 bis 19, **dadurch gekennzeichnet, dass** zumindest dem ersten Abfallnachbehandlungszweig (6a) eine, vorzugsweise durch einen Shredder gebildete Nachzerkleinerungseinrichtung nachgeschaltet ist.

21. Verfahren zur selektiven Behandlung von unsortierten oder vorsortierten Abfallstoffen (50), Teilen, Bauteilen und/oder Stoffen, insbesondere aus elektrischen oder elektronischen Geräten, vorzugsweise Altgeräten, wobei definierte ökoaktive Abfallbestandteile, welche beim nachfolgenden selektiven mechanischen Vorzerkleinern Schadstoffe freisetzen könnten, und/oder definierte Komponenten und Teile, aussortiert werden, und wobei Geräte und Gerätebestandteile, welche verbliebene ökopassive Abfallbestandteile enthalten, selektiv mechanisch durch eine Rohrmühle (22) vorzerkleinert und/oder zerkleinert werden, wobei die Vorzerkleinerung mittels gravitativer Aufprallzerkleinerung zumindest größtenteils durch gegenseitige Kollision der Altgeräte und deren Bestandteile erfolgt, wobei anschließend an die Aufprallzerkleinerung die vorzerkleinerten Materialien durch zumindest eine Trenneinrichtung (14) in Fraktionen (F₀, F₁, F₂, F₃, F₄, F₅) aufgetrennt werden und schadstoffbefrachtete und/oder sicherheits- und/oder umweltrelevante Materialien, Bauteile und Stoffe und/oder definierte, getrennt zu erfassende Fraktionsgruppen aussortiert werden, **dadurch gekennzeichnet, dass** die Drehzahl der prallkörperfreien Rohrmühle (22) veränderbar ist, dass die zumindest eine Trenneinrichtung (14) durch zumindest ein mit der Rohrmühle (22) mitrotierendes Trommelsieb (16) gebildet ist und dass anschließend an das Trommelsieb (16) eine Absaugeinrichtung (44) angeordnet ist und durch die Absaugeinrichtung (44) die Feinfraktion (F₆) von den vorzerkleinerten Abfallstoffen (50) abgetrennt wird.

22. Verfahren nach Anspruch 21, **dadurch gekennzeichnet, dass** für Abfälle, für welche der gewünschte Zerkleinerungsgrad nicht erreicht wurde, eine nochmalige selektive mechanische Vorzerkleinerung oder eine selektive mechanische Nachzerkleinerung durchgeführt wird.

23. Verfahren nach Anspruch 21 oder 22, **dadurch gekennzeichnet, dass** die Aufteilung in Fraktionen, volumen- und/oder querschnittsabhängig erfolgt.

24. Verfahren nach einem der Ansprüche 21 bis 23, **dadurch gekennzeichnet, dass** die Aufteilung in Fraktionen, gewichts- und/oder dichteabhängig erfolgt.

25. Verfahren nach einem der Ansprüche 21 bis 24, **dadurch gekennzeichnet, dass** die Aufteilung in Fraktionen, aufgrund der ferromagnetischen Eigenschaften erfolgt.

26. Verfahren nach einem der Ansprüche 21 bis 25, **dadurch gekennzeichnet, dass** zumindest teilweise manuell aussortiert wird.

27. Verfahren nach einem der Ansprüche 21 bis 26, **dadurch gekennzeichnet, dass** zumindest teilweise automatisch aussortiert wird.

28. Verfahren nach Anspruch 27, **dadurch gekennzeichnet, dass** die automatische Aussortierung mittels eines optischen Identifikationssystems erfolgt.

29. Verfahren nach Anspruch 27 oder 28, **dadurch gekennzeichnet, dass** die automatische Aussortierung mittels Nah-Infrarot-Spektroskopie erfolgt.

30. Verfahren nach einem der Ansprüche 21 bis 29, **dadurch gekennzeichnet, dass** zumindest eine nach dem Aussortieren verbleibende Fraktion einer mechanischen Nachzerkleinerung, vorzugsweise durch einen Shredder zugeführt wird.

31. Verfahren nach einem der Ansprüche 21 bis 30, **dadurch gekennzeichnet, dass** zumindest eine Fraktion einer externen Behandlung, Verwertung oder Beseitigung zugeführt wird.

32. Verfahren nach einem der Ansprüche 21 bis 31, **dadurch gekennzeichnet, dass** die gravitative selektive mechanische Vorzerkleinerung in einer rotierenden Rohrmühle, vorzugsweise ohne abfallfremde lose Prallkörper, durchgeführt wird.

## Claims

1. Facility (2) for selective treatment of non-sorted or pre-sorted waste materials (50), parts, components and/or substances, in particular from electrical and/or electronic equipment, preferably scrap or obsolete equipment, comprising a waste sorting system (4) with at least one waste treatment line (6) and at least one separating means (8, 12) and at least one selective mechanical pre-crushing device (10), which is positioned in the waste treatment line (6) following at least one first separating means (8) for removal of defined eco-active waste components and/or other defined components or parts, where the mechanical pre-crushing device (10) is a gravity impact crusher and is configured as a cylindrical mill (22), and where, with reference to the waste flow in the waste treatment line (6), downstream of the pre-crushing device (10) at least one separator (14) is provided for separating the pre-crushed material into fractions (F₀, F₁, F₂, F₃, F₄, F₅), **characterised in that** the rotational speed of the cylindrical mill (22) without added impact bodies is variable, and that at least one separator (14) is configured as at least one drum screen (16) rotating with the cylindrical mill (22), and that following the drum screen (16) a suction unit (44) is provided.

2. Facility (2) according to claim 1, **characterised in that** following the separator (14) the waste treatment line (6) branches into at least two waste treatment branches (6a, 6b), preferably a first waste treatment branch (6a) for coarse fraction (F₅), and at least one second waste treatment branch (6b) for finer fractions (F₁, F₂, F₃, F₄).

3. Facility (2) according to claim 2, **characterised in that** in at least one waste treatment branch (6a, 6b) at least one second separating means (12) is provided for a final separating operation.

4. Facility (2) according to any of claims 1 to 3, **characterised in that** at least one separator (14) is configured as at least one sieve unit, preferably a riddle screen (18), particularly preferably at least two riddle screens (18) being combined into one sieve unit (40).

5. Facility (2) according to any of claims 1 to 4, **characterised in that** the cylindrical mill (22) has a rotation axis (25) which is disposed essentially horizontally, at least in one operational state.

6. Facility (2) according to claim 5, **characterised in that** the cylindrical mill (22) is tiltable by a tilting device (27) about an axis (27a) approximately normal to the rotation axis (25).

7. Facility (2) according to any of claims 1 to 6, **characterised in that** a suction device (44) for sucking off small parts and/or preferably gaseous pollutants is provided preferably in the area where the waste material exits the selective mechanical pre-crushing device (10).

8. Facility (2) according to any of claims 1 to 7, **characterised in that** the cylindrical mill (22) has an essentially cylindrical drum (24) with a preferably essentially smooth interior wall.

9. Facility (2) according to claim 8, **characterised in that** the interior wall of the drum (24) is provided with at least one impacting element, preferably at least one impact bar (36).

10. Facility (2) according to claim 9, **characterised in that** the impact bar (36) is at least sectionally disposed essentially parallel to the rotation axis (25).

11. Facility (2) according to claim 9 or 10, **characterised in that** the impact bar (36) is at least sectionally essentially helix-shaped.

12. Facility (2) according to any of claims 9 to 11, **characterised in that** the interior of the drum (24) is provided with at least one guiding vane.

13. Facility (2) according to any of claims 1 to 12, **characterised in that** the first and/or second separating means (8, 12) is provided with at least one separating conveyor belt (9, 13) for manual and/or automated removal of noxious or other materials and certain defined waste components.

14. Facility (2) according to any of claims 1 to 13, **characterised in that** the first and/or second separating means (8, 12) is provided with an optical identification system for automated removal.

15. Facility (2) according to any of claims 1 to 14, **characterised in that** the first and/or second separating means (8, 12) is provided with a near-infrared spectroscope system for automated removal.

16. Facility (2) according to any of claims 1 to 15, **characterised in that** the first and/or second separating means (8, 12) is provided with a pneumatical or mechanical ejector system for automated removal.

17. Facility (2) according to any of claims 1 to 16, **characterised in that** a magnetic separator device is provided for removal and/or separation of waste material into fractions.

18. Facility (2) according to any of claims 1 to 17, **characterised in that** an electrostatic separator is provided for removal and/or separation of waste material into fractions.

19. Facility (2) according to any of claims 1 to 18, **characterised in that** at least an eddy-current separator, an air separator and/or a pneumatic table is provided for removal and/or separation of waste material into fractions.

20. Facility (2) according to any of claims 1 to 19, **characterised in that** at least the first waste after-treatment branch (6a) is followed by a follow-up comminution device preferably configured as a shredder.

21. Method for the selective treatment of non-sorted or pre-sorted waste materials (50), parts, components and/or substances, in particular from electrical and/or electronic equipment, preferably scrap or obsolete equipment, where defined eco-active waste components which could release noxious substances during the following selective mechanical pre-crushing process, and/or other defined components or parts, are removed and where equipment or equipment parts containing remaining ecopassive waste components are selectively mechanically pre-crushed and/or crushed in a cylindrical mill (22), the pre-crushing being effected by gravity impact crushing at least mostly through mutual collisions of the waste objects or parts thereof, and where following the impact crushing the pre-crushed materials are separated by at least one separator (14) into fractions (F₀,F₁,F₂,F₃,F₄, F₅), noxious and/or safety-relevant and/or environmentally relevant materials, parts or substances, and/or defined fraction groups, which are to be treated separately, being removed, **characterised in that** the rotational speed of the cylindrical mill (22) without added impact bodies is variable, and that at least one separator (14) is configured as at least one drum screen (16) rotating with the cylindrical mill (22), and that following the drum screen (16) a suction unit (44) is provided, and that by this suction unit (44) the fine fraction (F₀) is separated from the pre-crushed waste material (50).

22. Method according to claim 21, **characterised in that** in the case of waste material which has not been sufficiently crushed to the desired degree, a repeated selective pre-crushing process or a selective mechanical after-crushing process is carried out.

23. Method according to claim 21 or 22, **characterised in that** the separation into fractions depends on volume and/or cross-section.

24. Method according to any of claims 21 to 23, **characterised in that** the separation into fractions depends on weight and/or density.

25. Method according to any of claims 21 to 24, **characterised in that** the separation into fractions is carried out based on ferromagnetic properties.

26. Method according to any of claims 21 to 25, **characterised in that** separation is, at least partly, carried out manually.

27. Method according to any of claims 21 to 26, **characterised in that** separation is, at least partly, carried out automatically.

28. Method according to claim 27, **characterised in that** the automated separating process is carried out by means of an optical identification system.

29. Method according to claim 27 or 28, **characterised in that** the automated separating process is carried out by means of near-infrared spectroscopy.

30. Method according to any of claims 21 to 29, **characterised in that** at least one fraction left over after completion of the separating process, is subjected to mechanical follow-up comminution, preferably by means of a shredder.

31. Method according to any of claims 21 to 30, **characterised in that** at least one fraction is being externally treated, utilised or discarded.

32. Method according to any of claims 21 to 31, **characterised in that** gravitative selective mechanical pre-crushing is carried out in a rotating cylindrical mill, preferably without the use of loose impact bodies which are not part of the waste material.

## Revendications

1. Installation (2) de traitement sélectif de déchets (50) pré-triés ou non pré-triés, de pièces, de composants et autres matières, notamment en provenance d'appareils électriques et/ou électroniques, notamment des vieux appareils, comprenant :
- un système de tri de déchets (4) ayant au moins une ligne de traitement de déchets (6),
- au moins un moyen de sélection (8, 12) et au moins une installation de pré-réduction (10), mécanique, dans la ligne de traitement de déchets (6) à la suite d'au moins un premier moyen de sélection (8) pour éliminer des déchets définis, à activité écologique et/ou d'autres composants et pièces, définis,
* l'installation de pré-réduction mécanique (10) est une installation pour réduire par des chocs par gravité et par un cylindre de broyeur (22), et
* selon le flux de déchets sur la ligne de traitement de déchets (6), en aval de l'installation de pré-réduction (10), il y a au moins une installation de séparation (14) pour séparer les matières réduites en fractions (F₀ F₁ F₂, F₃, F₄, F₅),
installation **caractérisée en ce que**
la vitesse de rotation du cylindre de broyeur (22), sans organes déflecteurs est variable, et
au moins un séparateur (14) est formé par au moins un tamis en tambour (16) tournant avec le cylindre de broyeur (22) et un aspirateur (44) est relié au tamis en forme de tambour (16).

2. Installation (2) selon la revendication 1,
**caractérisée en ce que**
la ligne de traitement de déchets (6) est divisée à la suite de l'installation de séparation (14) en au moins deux branches de traitement de déchets (6a, 6b), de préférence en une première branche de traitement de déchets (6a) pour la fraction grossière (F₅) et au moins une seconde branche de traitement de déchets (6b) pour une fraction plus fine (F₁ F₂, F₃, F₄).

3. Installation (2) selon la revendication 2,
**caractérisée par**
au moins une branche de traitement de déchets (6a, 6b) prévue dans au moins un second moyen de sélection (12) pour réaliser le classement en sortie.

4. Installation (2) selon l'une des revendications 1 à 3,
**caractérisée en ce qu'**
au moins un séparateur (14) est formé par au moins un dispositif à tamis, de préférence un tamis vibrant (18) et de manière particulièrement préférentielle, au moins deux tamis vibrants (18) sont réunis en un tamis (40).

5. Installation (2) selon l'une des revendications 1 à 4,
**caractérisée en ce que**
le cylindre de broyeur (22) comporte au moins un axe de rotation (25) au moins pratiquement horizontal en position de fonctionnement.

6. Installation (2) selon la revendication 5,
**caractérisée en ce que**
le cylindre de broyeur (22) est monté basculant autour d'un axe (27a) sensiblement normal à l'axe de rotation (25) par une installation de basculement (27).

7. Installation (2) selon l'une des revendications 1 à 6,
**caractérisée en ce que**
de préférence au niveau de la zone de sortie des déchets de l'installation de réduction mécanique sélective (10), un aspirateur (44) aspire les petits composants et/ou de préférence les produits polluants à l'état gazeux.

8. Installation (2) selon l'une des revendications 1 à 7,
**caractérisée en ce que**
le cylindre broyeur (22) est composé d'un tambour (24) essentiellement cylindrique avec une paroi intérieure de préférence pratiquement lisse.

9. Installation (2) selon la revendication 8,
**caractérisée en ce que**
la paroi intérieure du tambour (24) comporte au moins un élément déflecteur, de préférence au moins une lame (36).

10. Installation (2) selon la revendication 9,
**caractérisée en ce que**
la lame (36) est au moins par segments, parallèle à l'axe de rotation (25).

11. Installation (2) selon la revendication 9 ou 10,
**caractérisée en ce que**
la lame (36) a une forme pratiquement hélicoïdale au moins par segments.

12. Installation (2) selon l'une des revendications 9 à 11,
**caractérisée par**
une tôle de guidage à l'intérieur du tambour (24).

13. Installation (2) selon l'une des revendications 1 à 12,
**caractérisée en ce que**
le premier et le second moyen de sélection (8, 12) comportent au moins une bande transporteuse de sélection (9, 13) pour sélectionner manuellement et/ou automatiquement les matières nocives et les matériaux ainsi que des composants définis de déchets.

14. Installation (2) selon l'une des revendications 1 à 13,
**caractérisée en ce que**
le premier et/ou le second moyen de sélection (8, 12) comporte(nt) un système d'identification optique pour la sélection automatique.

15. Installation (2) selon l'une des revendications 1 à 14,
**caractérisée en ce que**
le premier et/ou le second moyen de sélection (8, 12) comporte(nt) un système de spectroscope travaillant dans le proche infrarouge pour la sélection automatique.

16. Installation (2) selon l'une des revendications 1 à 15,
**caractérisée en ce que**
le premier et/ou le second moyen de sélection (8, 12) comporte(nt) une installation d'éjection pneumatique ou mécanique pour assurer la sélection automatique.

17. Installation (2) selon l'une des revendications 1 à 16,
**caractérisée par**
une installation de séparation magnétique des matériaux pour sélectionner et/ou séparer en fractions.

18. Installation (2) selon l'une des revendications 1 à 17,
**caractérisée par**
au moins un séparateur électrostatique pour sélectionner et/ou séparer en fractions.

19. Installation (2) selon l'une des revendications 1 à 18,
**caractérisée par**
au moins un séparateur à flux tourbillonnaire, une trémie à soufflante et/ou un foyer ventilé pour sélectionner et/ou séparer en fractions.

20. Installation (2) selon l'une des revendications 1 à 19,
**caractérisée par**
au moins une première branche de post-traitement de déchets (6a), suivie de préférence par une installation de post-réduction constituée par un broyeur.

21. Procédé de traitement sélectif de déchets (50) pré-triés ou non triés, de pièces, de composants et/ou d'un tissu, notamment en provenance d'appareils électriques ou électroniques, de préférence des appareils anciens,
selon lequel des composants de déchets à activité écologique, définis, susceptibles de dégager des matières polluantes lors de la réduction mécanique sélective suivante et/ou des composants ou des pièces définis qu'il faut éliminer, et
des appareils et des composants d'appareils contenant des composants de déchets écologiquement passifs, résiduels, sont pré-réduits sélectivement de manière mécanique par un cylindre broyeur (22) et/ou seront réduits, et
la pré-réduction se fait à l'aide d'une installation de réduction par chocs et gravité au moins en grande partie par la collision réciproque des vieux appareils et de leurs composants, et
après la réduction par choc, les matières pré-réduites sont séparées en fractions (F₀, F₁, F₂, F₃, F₄, F₅) par au moins une installation de séparation (14) et les matières polluantes et/ou concernant la sécurité et/ou l'environnement, les composants et les tissus et/ou des groupes de fractions définis, distincts, sont éliminés,
**caractérisé en ce que**
la vitesse de rotation du cylindre de broyeur (22) sans organes déflecteurs est variable,
au moins une installation de séparation (14) est formée par au moins un tamis tambour (16), tournant avec le cylindre de broyeur (22), et
à la suite du tamis tambour (16), un aspirateur (44) sépare la fraction fine (F₆) des déchets pré-réduits (50).

22. Procédé selon la revendication 21,
**caractérisé en ce que**
pour des déchets qui n'atteignent pas le degré de réduction souhaité, une pré-réduction mécanique sélective est effectuée de nouveau ou une post-réduction mécanique sélective est effectuée.

23. Procédé selon les revendications 21 ou 22,
**caractérisé en ce que**
la répartition se fait en fractions, en fonction du volume et/ou de la section.

24. Procédé selon l'une des revendications 1 à 23,
**caractérisé en ce que**
la répartition se fait en fractions, en fonction du poids et/ou de la densité.

25. Procédé selon l'une des revendications 21 à 24,
**caractérisé en ce que**
la répartition en fractions se fait selon les caractéristiques ferromagnétiques.

26. Procédé selon l'une des revendications 21 à 25,
**caractérisé en ce qu'**
on sélectionne au moins en partie manuellement.

27. Procédé selon l'une des revendications 21 à 26,
**caractérisé en ce qu'**
on sélectionne au moins en partie automatiquement.

28. Procédé selon la revendication 27,
**caractérisé en ce que**
la sélection automatique se fait à l'aide d'un système d'identification optique.

29. Procédé selon la revendication 27 ou 28,
**caractérisé en ce que**
la sélection automatisée se fait à l'aide de la spectrographie dans le proche infrarouge.

30. Procédé selon l'une des revendications 21 à 29,
**caractérisé en ce qu'**
au moins une fraction qui subsiste après la sélection est soumise à une post-réduction mécanique, de préférence par un broyeur.

31. Procédé selon l'une des revendications 21 à 30,
**caractérisé en ce qu'**
on soumet au moins une fraction à un traitement externe, à une valorisation ou à une élimination.

32. Procédé selon l'une des revendications 21 à 31,
**caractérisé en ce que**
la pré-réduction mécanique sélective par gravité se fait dans un cylindre broyeur rotatif, de préférence sans organes déflecteurs, libres, étrangers aux déchets.
